# EUROPÄISCHE PATENTSCHRIFT

(11) **EP 1 839 966 B1**
(45) Veröffentlichungstag und Bekanntmachung des Hinweises auf die Patenterteilung: **26.11.2008**
(21) Anmeldenummer: 07005984.5
(22) Anmeldetag: 23.03.2007
(51) Int. Cl.: B60R 22/34, B62D 25/04

(54) **Vorrichtung zur Halterung einer Gurtspanneinrichtung**
Device for mounting a safety belt tensioning device
Dispositif destiné à la fixation d'un dispositif de tension de ceinture

(30) Priorität: 24.03.2006 DE 102006013649
(43) Veröffentlichungstag der Anmeldung: 03.10.2007
(73) Patentinhaber: GM Global Technology Operations, Inc., Detroit, MI 48265-3000 (US)
(72) Erfinder: Ahlburg, Ralf, 67294 Gauersheim (DE)
(74) Vertreter: Daniel, Ulrich W.P.

(56) Entgegenhaltungen:
- EP-A- 1 498 345
- EP-A1- 0 639 485
- EP-A2- 1 449 747
- DE-U1- 20 005 145
- FR-A- 2 862 034
- US-A- 5 769 456
- US-A- 5 863 071

## Beschreibung

Die Erfindung betrifft eine Vorrichtung zur Halterung einer Gurtspanneinrichtung im Bereich einer Säule eines Kraftfahrzeuges und eines Abstützelementes für eine Rückenlehne einer Rücksitzbank, mit einem mit einem Karosserieteil des Kraftfahrzeuges verschweißten Verstärkungselement.

Eine solche Vorrichtung ist beispielsweise aus der EP 1 449 747 A2 bekannt. Bei dieser Vorrichtung ist die Gurtspanneinrichtung auf einer Trägerplatte befestigt. Das Verstärkungselement ist rahmenartig gestaltet und hat eine Durchbrechung zum Einführen der Gurtspanneinrichtung. Die Trägerplatte wird mit dem Verstärkungselement verschraubt und verschließt die Durchbrechung. Weiterhin weist die Trägerplatte einen Arretierungspin zur Abstützung der Rückenlehne auf. Dies führt zunächst dazu, dass die Rückenlehne entweder mit dem Arretierungspin verrastet ist oder von diesem gelöst ist und die Rückenlehne umgeklappt werden kann. Damit lässt sich der Neigungswinkel der Rückenlehne nicht verstellen. Weiterhin weist diese Gestaltung eine Vielzahl von Bauteilen auf, welche aufwändig zu fertigen und zu montieren sind. Die Abstützung der auf die Rückenlehne einwirkenden Kräfte wird zudem durch die Verschraubung der Trägerplatte an dem Verstärkungselement und durch die Anbindung des Verstärkungselementes an dem Karosserieteil geleitet. Daher müssen alle Verbindungen mit einer besonders hohen Festigkeit gefertigt sein, was zu hohen Fertigungskosten führt.

Der Erfindung liegt das Problem zugrunde, eine Vorrichtung der eingangs genannten Art so weiterzubilden, dass sie eine einfache Anbindung unterschiedlich gestalteter Abstützelemente der Rückenlehne und der Gurtspanneinrichtung ermöglicht und besonders kostengünstig herstellbar ist.

Dieses Problem wird erfindungsgemäß dadurch gelöst, dass das Verstärkungselement eine nach oben offene, den Abmessungen der Gurtspanneinrichtung entsprechende Aufnahme hat, dass die Gurtspanneinrichtung unmittelbar an dem Verstärkungselement befestigt ist.

Durch diese Gestaltung benötigt die erfindungsgemäße Vorrichtung keine Trägerplatte zur Halterung der Gurtspanneinrichtung, da die Gurtspanneinrichtung unmittelbar mit dem Verstärkungselement verbunden wird. Dies trägt zur Reduzierung der Bauteile und damit zur Verringerung der Fertigungskosten der erfindungsgemäßen Vorrichtung bei. Die Montage der Gurtspanneinrichtung erfolgt auf besonders einfache Weise von oben in die Aufnahme des Verstärkungselementes. Weiterhin werden dank der Erfindung Haltekräfte der Gurtspanneinrichtung in das verstärkungselement eingeleitet. Hierdurch wird vermieden, dass die Anbindung der Gurtspanneinrichtung an dem verstärkungselement durch auf die Rückenlehne einwirkende Kräfte belastet wird. Dies trägt zur weiteren Reduzierung der Fertigungskosten der erfindungsgemäßen Vorrichtung bei. Ein weiterer Vorteil dieser Gestaltung besteht darin, dass die Gurtspanneinrichtung und das Abstützelement der Rückenlehne besonders vielfältig gestaltet sein können.

Abstützkräfte der Rückenlehne werden gemäß einer vorteilhaften Weiterbildung der Erfindung zuverlässig abgestützt, wenn das Verstärkungselement das Abstützelement der Rückenlehne haltert.

Die erfindungsgemäße Vorrichtung gestaltet sich konstruktiv besonders einfach, wenn das verstärkungselement im Querschnitt im Bereich der Gurtspanneinrichtung U-förmig gestaltet ist und wenn die Gurtspanneinrichtung an einer Basis befestigt ist und wenn von der Basis abstehende Schenkel mit ihren freien Enden an dem Karosserieteil des Kraftfahrzeuges befestigt sind. Ein weiterer Vorteil dieser Gestaltung besteht darin, dass das an dem Karosserieteil befestigte Verstärkungselement eine besonders hohe Stabilität aufweist. Vorzugsweise ist das Verstärkungselement aus Blech gefertigt.

Die Gurtspanneinrichtung könnte beispielsweise in einer Ausführungsform ausschließlich einen Gurtaufroller aufweisen. Die erfindungsgemäße Vorrichtung ermöglicht jedoch eine vielfältige Gestaltung der Gurtspanneinrichtung, wenn die Gurtspanneinrichtung eine bauliche Einheit aus Gurtaufroller und pyrotechnischem Element eines Gurtstraffers aufweist und wenn die bauliche Einheit in der nach oben offenen Aufnahme angeordnet ist. Damit lassen sich in Abhängigkeit von einer vorgesehenen Ausstattungsvariante des Kraftfahrzeuges wahlweise Gurtspanneinrichtungen mit oder ohne Gurtstraffer an dem Verstärkungselement anordnen.

Die Anbindung des Verstärkungselementes an dem Karosserieteil weist gemäß einer anderen vorteilhaften Weiterbildung der Erfindung eine besonders hohe Stabilität auf, wenn das Verstärkungselement einen Flansch zur Anbindung an einem Radgehäuse des Kraftfahrzeuges hat.

Zur weiteren Erhöhung der Stabilität der Anbindung des Verstärkungselementes an dem Karosserieteil trägt es gemäß einer anderen vorteilhaften Weiterbildung der Erfindung bei, wenn der Flansch unmittelbar auf der einem Halter eines Federbeins gegenüberliegenden Seite des Radgehäuses angeordnet ist. Diese Gestaltung hat den Vorteil, dass die Anbindung des Halters des Federbeins ohnehin zu einer Verstärkung des Karosserieteils führt, wodurch auf die Rückenlehne einwirkende Kräfte und Haltekräfte der Gurtspanneinrichtung besonders zuverlässig abgestützt werden können.

Zur weiteren Erhöhung der Stabilität der Anbindung des Verstärkungselements an dem Karosserieteil trägt es gemäß einer anderen vorteilhaften Weiterbildung der Erfindung bei, wenn das Verstärkungselement eine Zusatzverstärkung aufweist. Vorzugsweise ist die Zusatzverstärkung als mit dem verstärkungselement verschweißtes Blech ausgebildet.

Zur weiteren Erhöhung der Stabilität der Anbindung des Verstärkungselementes an dem Karosserieteil trägt es gemäß einer anderen vorteilhaften Weiterbildung der Erfindung bei, wenn ein zweiter Flansch seitlich neben der nach oben offenen Aufnahme angeordnet und an der Säule befestigt ist.

Die Befestigung des Abstützelementes für die Rückenlehne an dem Verstärkungselement gestaltet sich gemäß einer anderen vorteilhaften Weiterbildung der Erfindung besonders einfach, wenn das Abstützelement der Rückenlehne einen an dem Verstärkungselement befestigten und der Rückenlehne zugewandten Arm hat. Vorzugsweise ist der Arm mit dem Abstützelement verschraubt. Alternativ kann auch eine Nietverbindung zum Einsatz kommen.

Der der Rückenlehne zugewandte Arm könnte in einer Ausführungsform die Rückenlehne unmittelbar haltern. Die erfindungsgemäße Vorrichtung ermöglicht jedoch eine Flexibilität des Kraftfahrzeuges, wenn an dem freien Ende des Arms eine Verstelleinrichtung zur Verstellung des Neigungswinkels der Rückenlehne angeordnet ist. Damit kann durch eine entsprechende Gestaltung des Arms in einer Ausstattungsvariante die Rückenlehne unverstellbar gehalten sein und in einer anderen Ausstattungsvariante die Verstelleinrichtung eine Verstellung des Neigungswinkels der Rückenlehne ermöglichen.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: einen Teilbereich eines Kraftfahrzeuges im Bereich einer Säule mit einer erfindungsgemäßen Vorrichtung,
- Fig. 2: die erfindungsgemäße Vorrichtung aus Figur 1 in einer Schnittdarstellung entlang der Linie II - II,
- Fig. 3: die erfindungsgemäße Vorrichtung aus Figur 1 in einer Schnittdarstellung entlang der Linie III - III,
- Fig. 4: die erfindungsgemäße Vorrichtung aus Figur 3 in einer Schnittdarstellung entlang der Linie IV - IV.

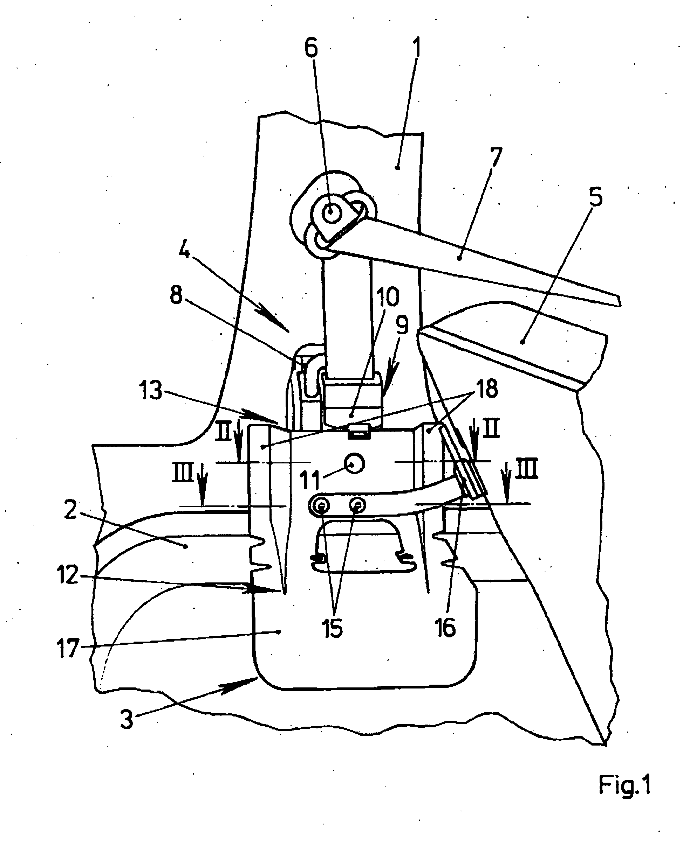

Figur 1 zeigt einen Teilbereich eines Kraftfahrzeuges im Bereich einer als C-Säule ausgebildeten Säule 1 und eines Radgehäuses 2 eines hinteren linken Rades mit einer Vorrichtung 3 zur Halterung einer Gurtspanneinrichtung 4. Die Gurtspanneinrichtung 4 ist hinter einer Rückenlehne 5 einer Rücksitzbank angeordnet und hat einen von einer Führung 6 gehaltenen Gurt 7. Die Führung 6 ist an der Säule 1 befestigt. Die Gurtspanneinrichtung 4 weist einen Gurtaufroller 8 und einen Gurtstraffer 9 mit einem pyrotechnischen Element 10 auf. Die Gurtspanneinrichtung 4 ist unmittelbar über ein Verbindungselement 11 an einem aus Blech gefertigten Verstärkungselement 12 befestigt. Hierfür hat das Verstärkungselement 12 eine nach oben hin offene Aufnahme 13, in die die Gurtspanneinrichtung 4 eingesetzt ist. An dem Verstärkungselement 12 ist zudem ein die Rückenlehne 5 abstützender Arm 14 über Schrauben 15 befestigt. Der Arm 14 haltert mit seinem freien Ende eine Verstelleinrichtung 16 zur Verstellung des Neigungswinkels der Rückenlehne 5. Das Verstärkungselement 12 hat einen ersten Flansch 17 zur Befestigung an dem Radgehäuse 2 des Kraftfahrzeuges und einen zweiten Flansch 18 zur Befestigung an der Säule 1.

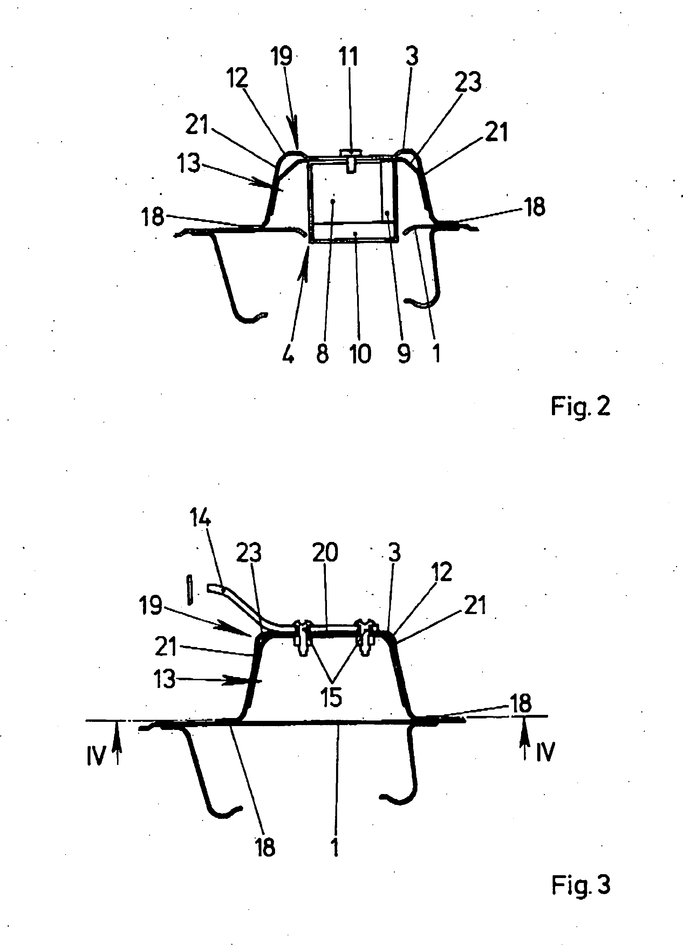

Die Figuren 2 und 3 zeigen in Schnittdarstellungen durch die Vorrichtung zur Halterung der Gurtspanneinrichtung 4 mit angrenzenden Bauteilen des Kraftfahrzeuges, dass das Verstärkungselement 12 einen U-förmigen Abschnitt 19 aufweist. An einer Basis 20 des U-förmigen Abschnitts 19 ist die Gurtspanneinrichtung 4 befestigt, während von der Basis 20 abstehende Schenkel 21 den zweiten Flansch 18 aufweisen, mit dem das Verstärkungselement 12 an der Säule 1 verschweißt ist. In dem Verstärkungselement 12 ist ein als Zusatzverstärkung 23 ausgebildetes Blech eingeschweißt.

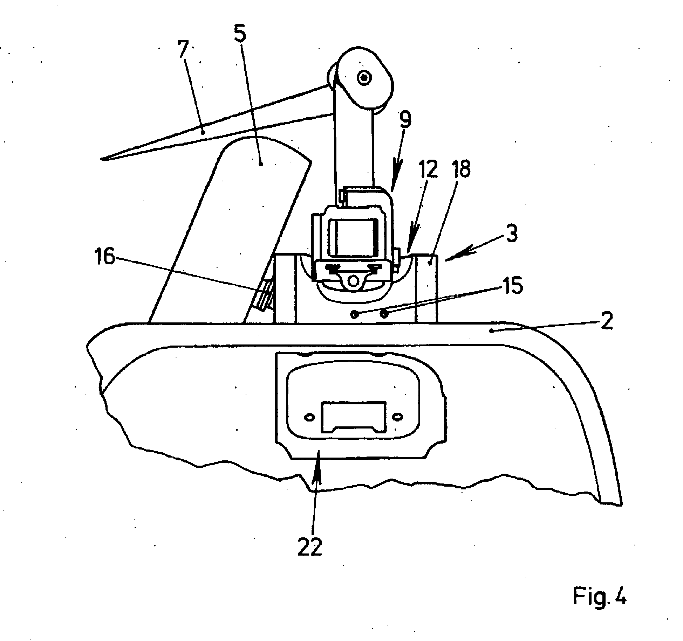

Figur 4 zeigt die Vorrichtung 3 mit angrenzenden Bauteilen des Kraftfahrzeuges in einer Schnittdarstellung entlang der Linie III - III durch Figur 2, und dass das Radgehäuse 2 an seiner dem Verstärkungselement 12 gegenüberliegenden Seite einen Halter 22 zur Anbindung eines nicht dargestellten Federbeins haltert. Der Halter 22 ist mit dem Radgehäuse 2 auf der dem ersten Flansch 17 des Verstärkungselementes 12 gegenüberliegenden Seite verschweißt.

## Patentansprüche

1. Vorrichtung (3) zur Halterung einer Gurtspanneinrichtung (4) im Bereich einer Säule (1) eines Kraftfahrzeuges und eines Abstützelementes für eine Rückenlehne (5) einer Rücksitzbank, mit einem mit einem Karosserieteil des Kraftfahrzeuges verschweißten Verstärkungselement (12), **dadurch gekennzeichnet, dass** das Verstärkungselement (12) eine nach oben offene, den Abmessungen der Gurtspanneinrichtung (4) entsprechende Aufnahme (13) hat, dass die Gurtspanneinrichtung (4) unmittelbar an dem Verstärkungselement (12) befestigt ist.

2. Vorrichtung (3) nach Anspruch 1, **dadurch gekennzeichnet, dass** das Verstärkungselement (12) das Abstützelement der Rückenlehne (5) haltert.

3. Vorrichtung nach Anspruch 1 oder 2, **dadurch gekennzeichnet, dass** das Verstärkungselement (12) im Querschnitt im Bereich der Gurtspanneinrichtung (4) U-förmig gestaltet ist und dass die Gurtspanneinrichtung (4) an einer Basis (20) befestigt ist und dass von der Basis (20) abstehende Schenkel (21) mit ihren freien Enden an dem Karosserieteil des Kraftfahrzeuges befestigt sind.

4. Vorrichtung nach zumindest einem der vorhergehenden Ansprüche, **dadurch gekennzeichnet, dass** die Gurtspanneinrichtung (4) eine bauliche Einheit aus Gurtaufroller (8) und pyrotechnischem Element (10) eines Gurtstraffers (9) aufweist und dass die bauliche Einheit in der nach oben offenen Aufnahme (13) angeordnet ist.

5. Vorrichtung nach zumindest einem der vorhergehenden Ansprüche, **dadurch gekennzeichnet, dass** das Verstärkungselement (12) einen Flansch (17) zur Anbindung an einem Radgehäuse (2) des Kraftfahrzeuges hat.

6. Vorrichtung nach zumindest einem der vorhergehenden Ansprüche, **dadurch gekennzeichnet, dass** der Flansch (17) unmittelbar auf der einem Halter (22) eines Federbeins gegenüberliegenden Seite des Radgehäuses (2) angeordnet ist.

7. Vorrichtung nach zumindest einem der vorhergehenden Ansprüche, **dadurch gekennzeichnet, dass** das Verstärkungselement (12) eine Zusatzverstärkung (23) aufweist.

8. Vorrichtung nach zumindest einem der vorhergehenden Ansprüche, **dadurch gekennzeichnet, dass** die Zusatzverstärkung (23) als mit dem Verstärkungselement (12) verschweißtes Blech ausgebildet ist.

9. Vorrichtung nach zumindest einem der vorhergehenden Ansprüche, **dadurch gekennzeichnet, dass** ein zweiter Flansch (18) seitlich neben der nach oben offenen Aufnahme (13) angeordnet und an der Säule (1) befestigt ist.

10. Vorrichtung nach zumindest einem der vorhergehenden Ansprüche, **dadurch gekennzeichnet, dass** das Abstützelement der Rückenlehne (5) einen an dem Verstärkungselement (12) befestigten und der Rückenlehne (5) zugewandten Arm (14) hat.

11. Vorrichtung nach zumindest einem der vorhergehenden Ansprüche, **dadurch gekennzeichnet, dass** an dem freien Ende des Arms (14) eine Verstelleinrichtung (16) zur Verstellung des Neigungswinkels der Rückenlehne (5) angeordnet ist.

## Claims

1. Device (3) for mounting a safety belt tensioning device (4) in the area of a pillar (1) of a motor vehicle and of a supporting element for a back rest (5) of a chair-back bank, equipped with a reinforcing element (12) sealed with a body component of the motor vehicle, **characterized in that** the reinforcing element (12) is equipped with an acceptance (13) open on the upper side and corresponding with the safety belt tensioning device (4) so that the safety belt tensioning device (4) is mounted on the reinforcing element (12).

2. Device (3) according to claims 1, **characterized in that** the reinforcing element (12) mounts the supporting element of the back rest (5).

3. Device according to claim 1 or 2, **characterized in that** the reinforcing element (12) is U-shaped in the cross section in the area of the safety belt tensioning device (4) and that the safety belt tensioning device (4) is fastened on a basis (20) and that the axles (21) distant from the basis (20) are fastened on the body component of the motor vehicle with their open endings.

4. Device according to at least one of the preceding claims, **characterized in that** the safety belt tensioning device (4) is equipped with a structural unity comprising a safety belt retractor (8) and a pyrotechnical element (10) of a safety belt pre-load device (9) and that the structural unity is aligned in the acceptance (13) open on the upper side.

5. Device according to at least one of the preceding claims, **characterized in that** the reinforcing element (12) is equipped with a flange (17) for the connection with a wheel box (2) of the motor vehicle.

6. Device according to at least one of the preceding claims, **characterized in that** the flange (17) is directly aligned on the side of the wheel box (2) opposite to the supporting element (22) of a spring strut.

7. Device according to at least one of the preceding claims, **characterized in that** the reinforcing element (12) is equipped with an additional reinforcing element (23).

8. Device according to at least one of the preceding claims, **characterized in that** the additional reinforcing element (23) comprises a blank sheet welded with the reinforcing element (12).

9. Device according to at least one of the preceding claims, **characterized in that** the a second flange (18) is laterally aligned next to the acceptance (13) open on the upper side and mounted on the pillar (1).

10. Device according to at least one of the preceding claims, **characterized in that** the supporting element of the back rest (5) is equipped with an arm (14) mounted on the reinforcing element (12) and oriented towards the back rest (5).

11. Device according to at least one of the preceding claims, **characterized in that** the on the open ending of the arm (14) there is an adjusting device (16) to adjust the inclination angle of the back rest (5).

## Revendications

1. Dispositif (3) destiné à la fixation d'un dispositif de tension de ceinture (4) dans la zone d'une colonne (1) d'un véhicule et d'un appui pour dossier de siège (5) d'une banquette arrière, muni d'un élément de renfort (12) soudé à la cabine du véhicule, **caractérisé en ce que** l'élément de renfort (12) a une fixation ouverte par le haut (13) correspondant aux dimensions du dispositif de tension de ceinture (4), et qu'ainsi le dispositif de tension de ceinture (4) est fixé directement à l'élément de renfort (12).

2. Dispositif (3) selon revendication 1, **caractérisé en ce que** l'élément de renfort (12) fixe l'appui du dossier de siège (5).

3. Dispositif (3) selon revendication 1 ou 2, **caractérisé en ce que** l'élément de renfort (12) est présenté en section transversale dans la zone du dispositif de tension de ceinture (4) en forme de U et que le dispositif de tension de ceinture (4) est fixé à une base (20) et que de la base (20) les branches en saillie (21) avec leurs extrémités libres sont fixées à la cabine du véhicule.

4. Dispositif selon au moins une des revendications précédentes, **caractérisé en ce que** le dispositif de tension de ceinture (4) présente une unité de construction avec enrouleur de ceinture (8) et élément pyrotechnique (10) d'un dispositif de pré-tension (9) et que l'unité de construction est montée dans la fixation ouverte vers le haut (13).

5. Dispositif selon au moins une des revendications précédentes, **caractérisé en ce que** l'élément de renfort (12) a un rebord (17) pour l'attache au caisson de la roue (2) du véhicule.

6. Dispositif selon au moins une des revendications précédentes, **caractérisé en ce que** le rebord (17) est directement monté sur le support de jambe de suspension (22) du côté opposé au caisson de la roue (2).

7. Dispositif selon au moins une des revendications précédentes, **caractérisé en ce que** l'élément de renfort (12) présente un renfort supplémentaire (23).

8. Dispositif selon au moins une des revendications précédentes, **caractérisé en ce que** le renfort supplémentaire (23) se présente sous forme de tôle soudée à la barre de renfort (12).

9. Dispositif selon au moins une des revendications précédentes, **caractérisé en ce que** un deuxième rebord (18) est monté latéralement à côté de la fixation ouverte vers le haut (13) et fixé à la colonne (1).

10. Dispositif selon au moins une des revendications précédentes, **caractérisé en ce que** l'appui du dossier de siège (5) a un bras tourné (14) vers l'élément de renfort fixé (12) et au dossier de siège (5).

11. Dispositif selon au moins une des revendications précédentes, **caractérisé en ce que,** à l'extrémité libre du bras (14) un système de déplacement du siège (16) pour le déplacement de l'angle d'inclinaison du dossier de siège (5) est monté.
